# EUROPEAN PATENT APPLICATION

(11) **EP 3 547 693 A1**
(43) Date of publication of application: **02.10.2019**
(21) Application number: 18165291.8
(22) Date of filing: 30.03.2018
(51) Int. Cl.: H04N 21/422, H04N 21/438, H04N 21/482, H04N 21/433

(54) **A METHOD AND SYSTEM FOR NAVIGATING THROUGH AVAILABLE CONTENT ITEMS**

(71) Applicant: Advanced Digital Broadcast S.A., 1262 Eysins (CH)
(72) Inventor: Wielgosz, Marcin, 65-119 Zielona Gora (PL)
(74) Representative: Kancelaria Eupatent.pl Sp. z.o.o

(57) **Abstract**

A computer-implemented method for navigating through available content items in a content receiver, the method comprising: receiving (901) a list of categories (310-340); receiving (905) descriptors of content items (311A-311K), each content item having associated at least one tag (410) and at least one category; arranging (906) the content items with respect to categories, to obtain for each category at least one list (311-314) of content items associated with this category and grouped with respect to tags; upon receiving (1101) a content item zapping command (SIMILAR+, SIMILAR-), selecting (1105) a next content item or a previous content item from the list of content items associated with the category and the tag of the currently watched content item; and presenting (1107) the selected content item.

## Description

### TECHNICAL FIELD

The present disclosure relates to a method and system for navigating through available content items.

### BACKGROUND

Customer devices (such as digital television Set Top Boxes, STBs) offer several possibilities of receiving downstream data, such as video content, from various sources, such as a broadcasting distribution network (satellite, cable, terrestrial), the Internet (OTT, VOD) etc. An increasing amount of available channels, programs, OTT and VOD assets make it difficult to browse through the currently available content and to find a desired program or category during a reasonable time. Therefore, situations may occur in which a user finds a program of interest in which its significant part has already passed. It may also happen that the user is discouraged from looking for a possibly more interesting programs related to a particular category due to a burdensome process of browsing. Moreover the user might not always be interested in watching a complete program, but is only interested in specific parts of it.

Therefore there is a need to provide a method and a system which would provide an easy and convenient way for navigating to a potentially desired content.

### SUMMARY

There is disclosed a computer-implemented method for navigating through available content items in a content receiver, the method comprising: receiving a list of categories; receiving descriptors of content items, each content item having associated at least one tag and at least one category; arranging the content items with respect to categories, to obtain for each category at least one list of content items associated with this category and grouped with respect to tags; upon receiving a content item zapping command, selecting a next content item or a previous content item from the list of content items associated with the category and the tag of the currently watched content item; and presenting the selected content item.

The content item can be a clip constituting a fragment of a recording.

The content item can be a complete recording.

The content item can be a live program.

The descriptors of content items and/or lists of content items associated with a category can be obtained from a content provider.

The lists of content items can be generated at the content receiver.

The lists of content items can be generated according to current user recommendation preferences.

The method may further comprise, upon receiving a category zapping command, selecting a next or previous category from the list of categories; and presenting a content item from the selected category.

The method may further comprise, upon receiving an item zapping command, selecting a next tag or a previous tag within the current category; and presenting a content item corresponding to the selected tag.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

There is also disclosed a system for navigating through available content items in a content receiver, the system comprising: a content receiving block for providing content of a plurality of programs; and a controller configured to perform the steps of the method as described herein.

The system may further comprise a remote control unit with a dedicated section of buttons comprising at least one of: a SIMILAR- button and a SIMILAR+ button configured to invoke the content item zapping command; a CAT+ button and a CAT- button configured to invoke the command to select a next or previous category from the list of categories; a NEXT button and a PREV button configured to invoke the command to select the next or previous tag within the current category; an INFO button configured to display additional information concerning the selected category, tag or content item; a BACK button configured to select the previously watched content item; and an OK button configured to enter the selected category or list or to play the selected content item.

### BRIEF DESCRIPTION OF DRAWINGS

The method presented herein is presented by means of example embodiments on a drawing, wherein:
Fig. 1 presents an example of a structure of a Set Top Box (STB);
Fig. 2 presents data stored in a memory 140 of the STB;
Fig. 3A presents a screen with an exemplary arrangement of lists of content items within particular categories;
Fig. 3B presents examples of the content items within a single tag;
Fig. 4 presents exemplary tags 410 and content item descriptors for a recorded program;
Fig. 5 presents exemplary categories 501-505;
Fig. 6 presents a remote control unit 600 with a dedicated section 620 of buttons 621-629;
Fig. 7 presents schematically an application structure;
Fig. 8 presents exemplary contents of an application main screen for a particular day;
Fig. 9 presents a flow chart of a main process;
Fig. 10 presents a flow chart of a categories monitoring process;
Fig. 11 presents a content mining navigation process.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

The system and method will be presented below with reference to an embodiment related to a television Set Top Box (STB). However, it may be implemented in an equivalent manner to other content receiving devices, such as personal computers, portable devices, smartphones, etc.

The term "program" as used herein may refer to any type of a content item, such as a television programming event, an event stored at a local memory (e.g. HDD) of the user device, a video on demand item, etc.

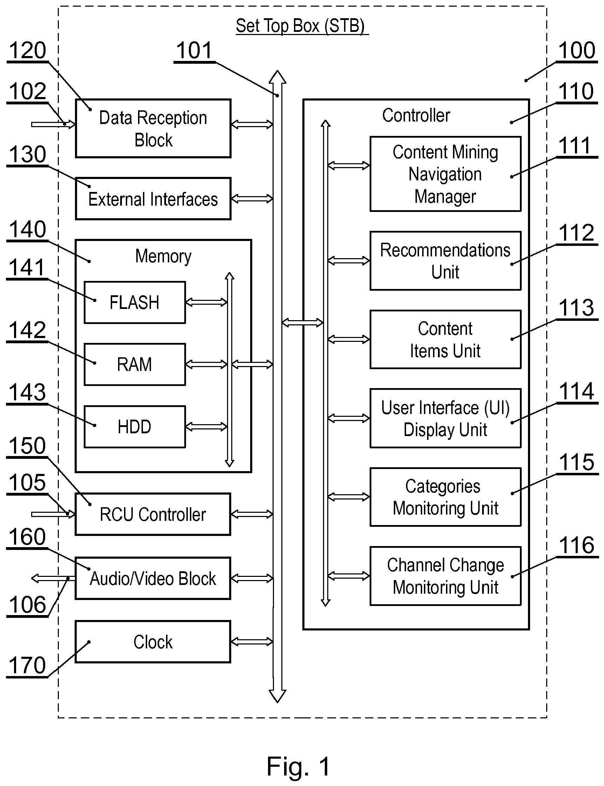

Fig. 1 presents an example of a structure of a Set Top Box (STB).

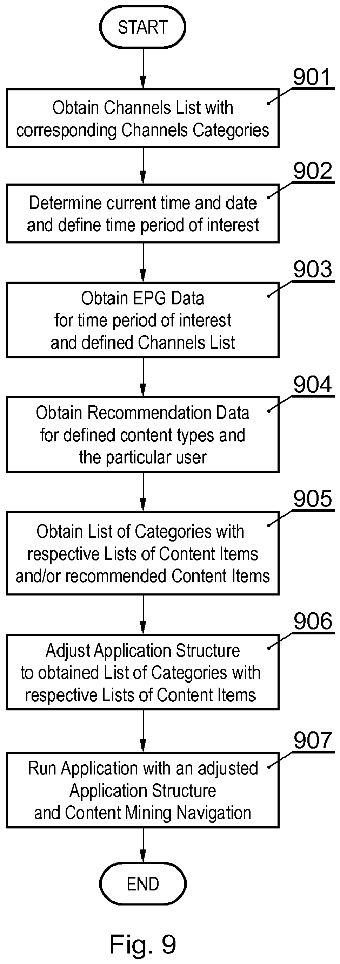

A controller 110 comprises a plurality of units configured to provide the functionality of the system as described herein in accordance with the method of Figs. 9-11.

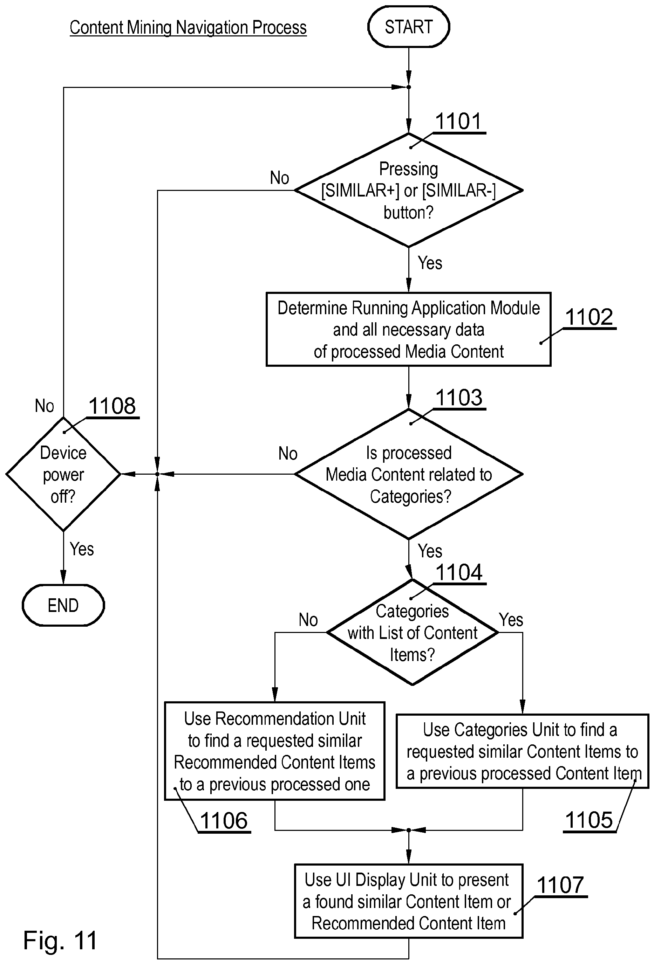

A content mining navigation manager 111 is responsible for executing a content mining navigation process of the device as presented in Fig. 11.

A recommendations unit 112 is responsible for handling and providing recommendations to a user.

A content items unit 113 is responsible for handling and arranging content items.

A user interface (UI) display unit 114 is responsible for preparing data and controlling the audio/video block 160 to display the data in a required arrangement.

A categories monitoring unit 115 is responsible for continuous monitoring of new, currently available categories.

A channel change monitoring unit 116 is responsible for detecting a channel change command.

The STB 100 operates utilizing memory blocks 140, including RAM 142, Flash 141 blocks and a hard disk drive (HDD) 143 or another type of mass storage that can be used to store video or other data locally at the STB, but is not essential for its operation.

A clock module 170 is configured to provide timing data necessary for cooperation of the device units.

A data reception block 120 is configured to receive downstream data 102, such as video content, from the broadcasting distribution network. The data reception block 120 (also called a front-end block) may comprise a plurality of tuners (such as satellite, cable, terrestrial or IPTV tuners), wherein one of the tuners receives content to be displayed at the television screen to which the STB is directly connected (e.g. the STB 100 connected to a TV set) and another tuner receives content to be recorded at the HDD 143.

External interfaces 130, such as the Ethernet interface, are configured to communicate, via at least one transmission channel, with the Ethernet (IP) network or the wireless network, in order to receive applications and/or content recommendation data, as well as to transmit user or STB statistic data.

The STB is operable by the user via a remote control unit (RCU) that communicates, typically via an infrared (IR) receiver receiving an IR signal 105, with a RCU controller block 150.

An audio/video block 160 is an example of a content presentation block and configured to decode the received content in response to, among others, the operation of the user interface (UI) display unit 114, convert it to an audio/video format suitable for presentation to the user, and to transmit the converted content via a transmission channel 106 to the TV set to which the STB is directly connected.

All modules of the STB communicate with each other via one or more internal data buses 101.

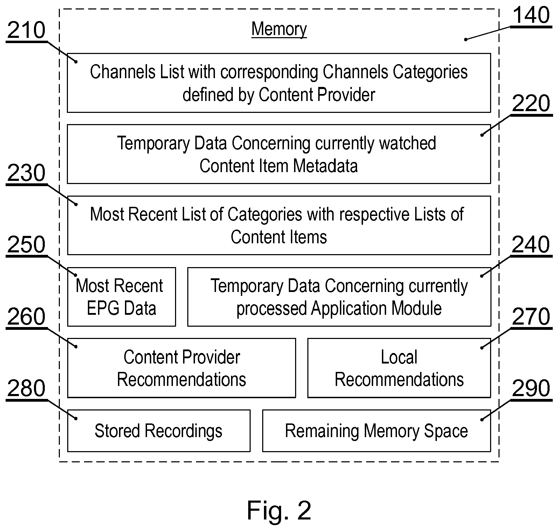

Fig. 2 presents data stored in a memory 140 of the STB. Data is stored in containers, such as tables or other data types.

A data set comprises a particular configuration, specifying a plurality of parameter types defined in data containers 210-290. That configuration can be changed by the user of the device or remotely by a system operator.

A channels list, such as television channels, with corresponding channels categories which are defined by a content provider are stored in data set 210.

Temporary data concerning currently watched content item metadata, (for example its category, tag) is stored in data set 220. The content item may be a clip constituting a fragment of a recording, a complete recording, a live program etc.

A most recent list of categories data set 230 comprises the most actual list of categories together with respective lists of the content items and/or list of recommendations (recommended content items) as well as their data.

A temporary data set 240 comprises information concerning currently processed application module, which need to store temporary data when operating.

A most recent EPG data set 250 comprises an up to date EPG (Electronic Program Guide) which provides additional data about content available from various sources (such as content delivery network or other content providers).

A content provider recommendations 260 data set comprises information concerning programs recommended by the content provider.

A local recommendations 270 data set comprises information concerning program recommendations based on current location of the user and current content provider as well as recommendations resulting from the user behavior. For example, if the STB is used by a plurality of users, each having a separately accessible user account (with separately tracked watched content or separate access to content over special channels such as VOD), then each user may receive different content items recommendations (e.g. related to the favorite type of content for that particular user, for example VOD content recommendations related to user's favorite television series).

A stored recordings data set 280 comprises recordings of the programs.

The remaining memory space 290 can be used for storing other data, depending on system needs.

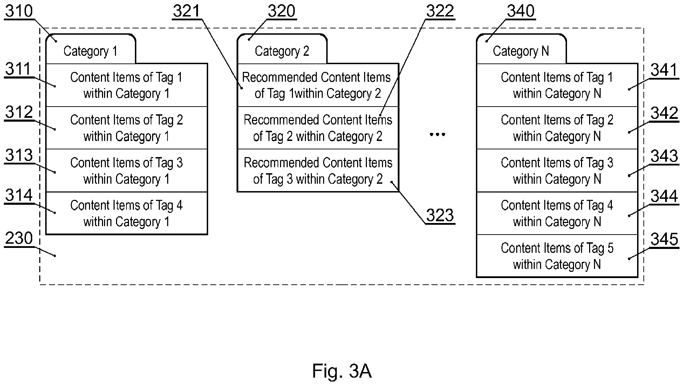

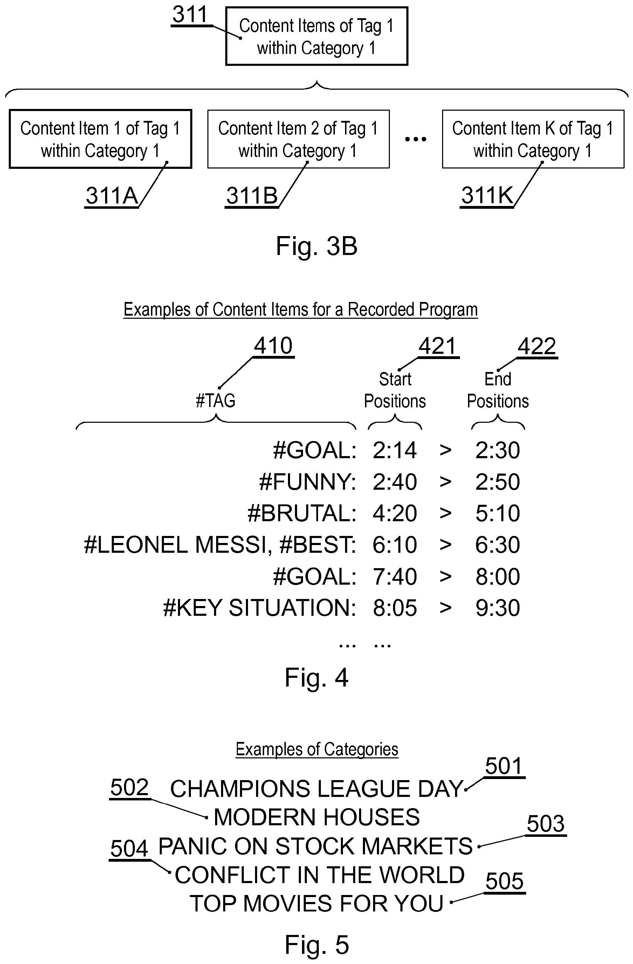

Fig. 3A presents a screen with an exemplary arrangement of lists of content items within particular categories 310-340. The categories mainly relate to current news, events, movies etc. Each content item has assigned at least one category and at least one tag 410. The tags may describe particular situations in the recorded content as will be presented in accordance to Fig. 4. The content items related to each category are arranged in lists 311-314, according to the assigned tags, under each category (for example lists 311-314 relate to the category 310). As presented in Fig. 3A there may be several content item lists 311-314 of different tags relating to the same category 310, and further as presented in Fig. 3B each list 311-314 may comprise several content items, for example the list 311 comprises content items 311A-311K related to the same tag. Similarly the recommended content items relating to particular category 320 are arranged in lists 321-323 under that particular category. The same arrangement is used for each further N category 340 with related lists 341-345 of the content items.

Fig. 4 presents exemplary tags 410 and content item descriptors for a recorded program. The tags 410 of the content items may have a form of #TAGs. Each descriptor of the content item, related to the tag, comprises its start position 421 and an end position 422 within the recorded program. The content items having common tag are grouped together and form the list as described with accordance to Figs. 3A-3B. For example there are two content items with a tag #GOAL, and they are grouped into one list with the tag #GOAL.

Fig. 5 presents exemplary categories 501-505, which may relate for example to sport events (CHAMPIONS LEAGUE DAY), news (PANIC ON STOCK MARKETS, CONFLICT IN THE WORLD), recommended movies (TOP MOVIES FOR YOU) etc.

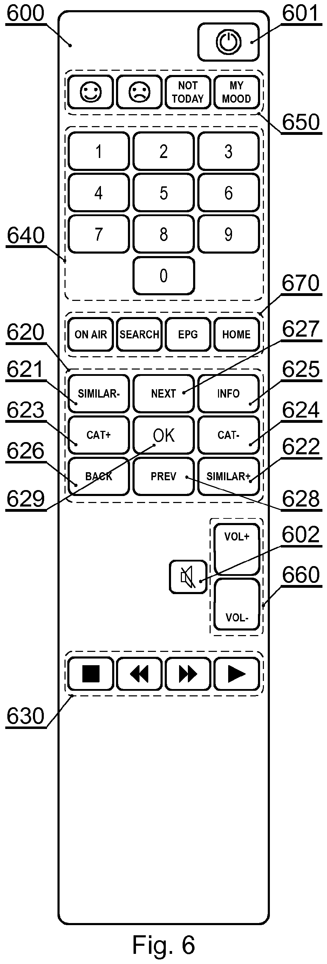

Fig. 6 presents a remote control unit 600 with a dedicated section 620 of buttons 621-629 for the functionality as described herein.

The CAT+ button 623 and the CAT- button 624 allow zapping (navigating) through the available categories. These buttons invoke selection of a next or previous category from the list of categories and presenting a content item from the selected category.

The SIMILAR- button 621 and the SIMILAR+ button 622 allow navigating through content items which are assigned to the same tag.

The dedicated SIMILAR-/SIMILAR+ buttons 621, 622 allow a user to change from currently watched content item of a particular tag to another related content item within the same tag, at any time without the need of coming back to the tag/category selection screen. Similarly the dedicated CAT+/CAT- buttons 623, 624 allow the user to change from currently watched content item of a particular category to another content item of different category (to the first content item of the first tag under different category), at any time without the need of coming back to the tag/category selection screen.

The NEXT button 627 and PREV button 628 allow zapping through the tags, within the current category, so as to switch to a different list of items associated with a next or previous tag for this category.

The INFO button 625 allows to display additional information concerning the selected category, tag or content item.

The BACK button 626 allows to jump to the previously watched content item.

The OK button 629 allows to enter the selected category or list or allows to play the selected content item.

A section 630 comprises buttons for providing trick modes of the currently watched content item.

A section 660 comprises a volume up and volume down buttons.

A button 602 provides a mute option.

A button 601 allows to switch on and off a user device.

A section 640 comprises a numeric pad buttons.

A section 650 provides buttons for describing current mood of the user, which is determinative for suggesting recommendations. For example the user may declare a sad mood and as a result the system does not recommend fun and entertaining content items but rather serious or neutral contents.

A section 670 provides buttons for selecting a content presentation screen, a search engine or a home screen.

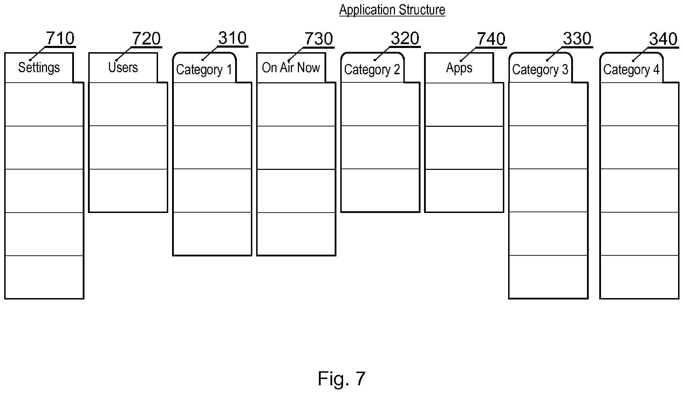

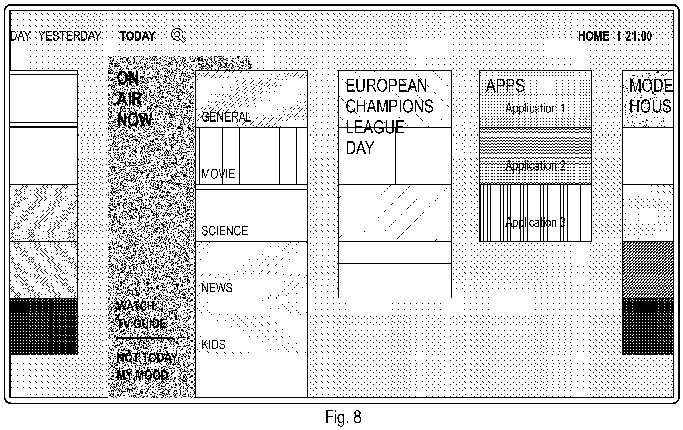

Fig. 7 presents schematically an application structure. A main screen comprises tabs related to: settings 710 of the system, users 720 for selecting the current user of the system, categories 310-340 (current events, movies, recommended content), applications 740 providing additional functionalities of the system, on air now 730 presenting currently available content. An exemplary content of the application main screen for a particular day is presented in Fig. 8.

Fig. 9 presents a flow chart of a main process. First, in step 901 a channel list with corresponding channels categories is obtained. Next, in step 902 current time and date is determined in order to define a time period of interest. Next, in step 903 EPG data for the list of channels and time period of interest, as determined in step 901, is prepared. In step 904, a recommendation data for defined content types and for a particular user is obtained. - Next in step 905 a list of categories with respective lists of content items and/or list of recommended content items is obtained. Next, in step 906 the content items are arranged with respect to the categories to obtain for each category at least one list 311-314 of the content items associated this category and grouped into tags and the application structure is adjusted to comply with the arranged list of categories with their respective lists of content items and/or list of recommended content items. It is also possible that an already arranged list of categories with their respective lists of content items and/or list of recommended content items is obtained directly from the content provider. In the last step 907, the application with the adjusted application structure and a content mining navigation process is started.

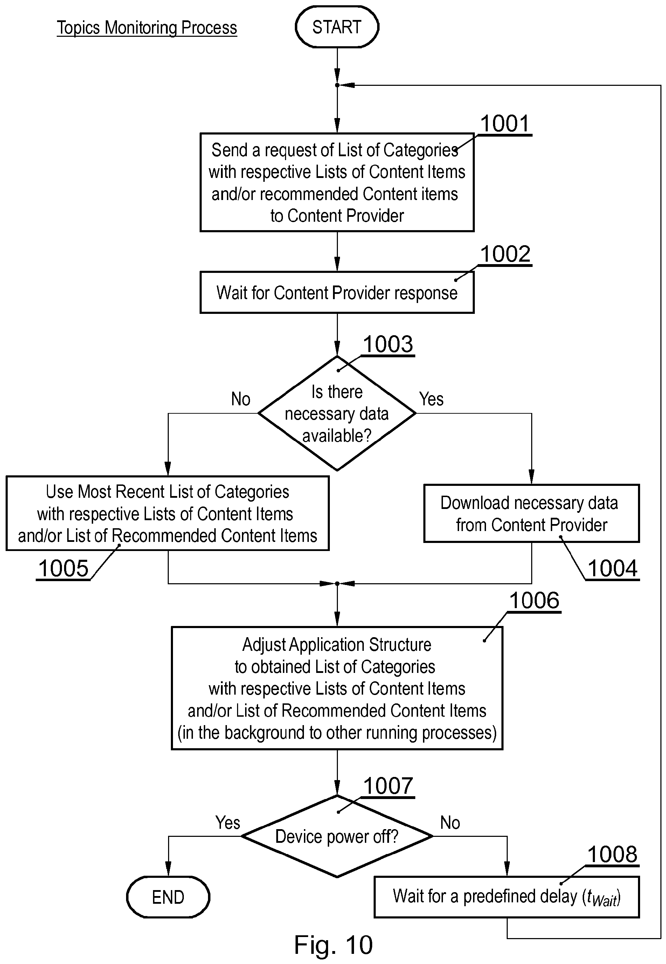

Fig. 10 presents a flow chart of a categories monitoring process. The process is running continuously in background in order to respond to any changes in categories availability. First, in step 1001 a request for the list of categories with respective lists of content items and/or list of recommended content items is sent to the content provider. Next, in step 1002 the procedure waits for the content provider response. Next, in step 1003 it is checked if necessary data is available. If so, the necessary data is downloaded from the content provider (step 1004) and the procedure moves to step 1006. Otherwise, in step 1005 the most recent list of categories with respective lists of content items and/or list of recommended content items is used. Next, in step 1006 the application structure is adjusted to the obtained list of categories with respective lists of content items and/or list of recommended content items. The adjustment is performed in the background to other running processes. Next, in step 1007 it is checked if a command for a device power off was received. If so, the process is terminated. Otherwise, the procedure waits for a predefined time (delay t_{wait}) and loops back to the first step 1001.

Fig. 11 presents a content mining navigation process. First, in step 1101 it is checked if the SIMILAR+ or the SIMILAR- button was pressed. If not, in step 1108 it is checked if a device power off command was received, and if so then the procedure terminates, otherwise it loops back to the beginning. If in step 1101 the SIMILAR+ or the SIMILAR- button was pressed, then in step 1102 a running application module and all necessary data of a process media content are determined. Next, in step 1103 it is checked if the processed media content is related to the available categories. If not, then the procedure moves to step 1108. Otherwise, in step 1104 it is checked if there is any list of content items related to the category. If yes, then in step 1105 the content items unit is utilized to find and request a next or previous similar content item to the previously processed content item. Next the procedure continues to step 1107, in which a user interface (UI) is used to present the selected (found) similar content item or recommended content item. Next the procedure moves to step 1108. If in step 1104, it is determined that the category does not have the list of content items, then in step 1106 a recommendation unit is used for finding a requested similar, recommended content, to a previous processed one.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for navigating through available content items may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for navigating through available content items in a content receiver, the method comprising:
- receiving (901) a list of categories (310-340);
- receiving (905) descriptors of content items (311A-311K), each content item having associated at least one tag (410) and at least one category;
- arranging (906) the content items with respect to categories, to obtain for each category at least one list (311-314) of content items associated with this category and grouped with respect to tags;
- upon receiving (1101) a content item zapping command (SIMILAR+, SIMILAR-), selecting (1105) a next content item or a previous content item from the list of content items associated with the category and the tag of the currently watched content item; and
- presenting (1107) the selected content item.

2. The method according to any of previous claims wherein, the content item (311A-311 K) is a clip constituting a fragment of a recording.

3. The method according to any of previous claims wherein, the content item (311A-311 K) is a complete recording.

4. The method according to any of previous claims wherein the content item (311A-311 K) is a live program.

5. The method according to any of previous claims wherein the descriptors of content items (311 A-311 K) and/or lists (311-314) of content items associated with a category (310-340) are obtained from a content provider.

6. The method according to any of previous claims wherein the lists (311-314) of content items are generated at the content receiver.

7. The method according to any of previous claims wherein the lists (311-314) of content items are generated according to current user recommendation preferences.

8. The method according to any of previous claims, further comprising, upon receiving a category zapping command (CAT+, CAT-), selecting a next or previous category from the list of categories; and presenting a content item from the selected category.

9. The method according to any of previous claims, further comprising, upon receiving an item zapping command (NEXT, PREV), selecting a next tag or a previous tag within the current category; and presenting a content item corresponding to the selected tag.

10. A computer program comprising program code means for performing all the steps of the computer-implemented method according to any of claims 1-9 when said program is run on a computer.

11. A computer readable medium storing computer-executable instructions performing all the steps of the computer-implemented method according to any of claims 1-9 when executed on a computer.

12. A system for navigating through available content items in a content receiver (100), the system comprising:
- a content receiving block (120) for providing content of a plurality of programs; and
- a controller (110) configured to perform the steps of the method according to any of claims 1 to 9.

13. The system according to claim 12, further comprising a remote control unit (600) with a dedicated section of buttons (621-629) comprising at least one of:
- a SIMILAR- button (621) and a SIMILAR+ button (622) configured to invoke the content item zapping command;
- a CAT+ button (623) and a CAT- button (624) configured to invoke the command to select a next or previous category from the list of categories;
- a NEXT button (627) and a PREV button (628) configured to invoke the command to select the next or previous tag within the current category;
- an INFO button (625) configured to display additional information concerning the selected category, tag or content item;
- a BACK button (626) configured to select the previously watched content item; and
- an OK button (629) configured to enter the selected category or list or to play the selected content item.
